# EUROPEAN PATENT SPECIFICATION

(11) **EP 2 927 994 B1**
(45) Date of publication and mention of the grant of the patent: **16.01.2019**
(21) Application number: 15161809.7
(22) Date of filing: 31.03.2015
(51) Int. Cl.: H01M 2/26, H01M 2/22, H01M 10/04

(54) **RECHARGEABLE BATTERY**
WIEDERAUFLADBARE BATTERIE
BATTERIE RECHARGEABLE

(30) Priority: 04.04.2014 KR 20140040687
(43) Date of publication of application: 07.10.2015
(73) Proprietor: Samsung SDI Co., Ltd., Gyeonggi-do 446-902 (KR)
(72) Inventor: Kim, Joong-Heon, 446-902 Yongin-si, Gyeonggi-do (KR); Lee, Hui-Jun, 446-902 Yongin-si, Gyeonggi-do (KR); Oh, Jeong-Won, 446-902 Yongin-si, Gyeonggi-do (KR)
(74) Representative: Gulde & Partner

(56) References cited:
- JP-A- 2013 218 827
- US-A1- 2004 061 476
- US-A1- 2010 285 353
- US-A1- 2011 244 314
- KUJANPAA V ET AL: "LASER WELDING WITH FILLER WIRE", WELDING IN THE WORLD, ELSEVIER / INTERNATIONAL INSTITUTE OF WELDING, ROISSY, FR, vol. 46, 1 July 2002 (2002-07-01), pages 63-74, XP001133104, ISSN: 0043-2288

## Description

### BACKGROUND

### 1. Field

### Embodiments relate to a rechargeable battery

### 2. Description of the Related Art

A rechargeable battery is a battery that can be repeatedly charged and discharged, unlike a primary battery that is incapable of being recharged. A low-capacity rechargeable battery may be used for small portable electronic devices such as a mobile phone, a laptop computer, or a camcorder, and a large-capacity rechargeable battery may be used as a power supply for driving a motor such as a hybrid vehicle.

A large capacity high power rechargeable battery using a non-aqueous electrolyte of a high energy density has been considered. The large capacity high power rechargeable battery may be configured of a high power battery module in which a plurality of rechargeable batteries are coupled in series so as to be used to drive the motor for devices requiring large power, for example, an electric vehicle, or the like.

A single large capacity high power rechargeable battery may be configured of a plurality of rechargeable batteries coupled in series, and the rechargeable battery may have a cylindrical shape, a squared or prismatic shape, or a pouch shape.

The prismatic rechargeable battery may include an electrode assembly in which a positive electrode and a negative electrode (having a separator therebetween) are positioned, a case accommodating the electrode assembly therein, a cap plate closing and sealing the case and having a terminal hole into which a terminal is inserted, and a terminal electrically connected through the electrode assembly and a current collecting part and protruded to the outside of the case. US2011244314 discloses a rechargeable battery providing a current collecting plate with two current collecting members welded together.

US2010285353 discloses a method of welding a current collector to the electrode plates by using a filler.

### SUMMARY

Embodiments are directed to a rechargeable battery.

The invention is realized by providing a rechargeable battery including an electrode assembly that is chargeable and dischargeable; electrode terminals electrically connected to the electrode assembly; a case accommodating the electrode assembly therein; and a current collecting part electrically connecting between the electrode assembly and the electrode terminals, wherein the current collecting part includes a current collecting plate electrically connected to the electrode assembly, and a lead member connecting the electrode terminals and the current collecting plate, the current collecting plate includes a first current collecting member connected to the lead member, and a second current collecting member welded to the first current collecting member such that welding protuberances are provided on a region where the first current collecting member and the second current collecting member are welded. The welding protuberances are formed by laser welding in a state in which filler is positioned at a space between the first current collecting member and the second current collecting member.

The welding protuberances may cover a part of an edge of the first current collecting member and a part of an edge of the second current collecting member.

The welding protuberances may protrude to have a maximum height at a midpoint between the first current collecting member and the second current collecting member.

The first current collecting member may include a plurality of first protruding parts protruding from one side thereof, and the second current collecting member may include a plurality of second protruding parts in an interengaging complementary relationship with the plurality of first protruding parts.

The first protruding part may have a width that decreases from a base thereof to a protruding end thereof.

The second protruding part may have a width that decreases from a base thereof to a protruding end thereof, and an edge portion of the second protruding part may be welded to the first protruding part.

The first current collecting member may include a first bent part protruding at an edge thereof, the second current collecting member may include a second bent part facing the first bent part and protruding at an edge of the second current collecting member, and the welding protuberance may be formed by welding the first bent part and the second bent part.

The first bent part and the second bent part may protrude at a same height with respect to each other.

The electrode assembly may include an uncoated part at an end thereof, and portions of the uncoated part may be sandwiched between the first protruding parts and the second protruding parts.

The first collecting member may be integrated with the lead member as a one-piece unit.

The width of the first protruding part may decrease gradually from a base thereof to a protruding end thereof.

The first collecting member may be made of the same material as that of the lead member.

### BRIEF DESCRIPTION OF THE DRAWINGS

Features will be apparent to those of skill in the art by describing in detail exemplary embodiments with reference to the attached drawings in which:
FIG. 1 illustrates a perspective view schematically showing a rechargeable battery according to a first exemplary embodiment.
FIG. 2 illustrates a cross-sectional view taken along line II-II in FIG. 1.
FIG. 3 illustrates an exploded perspective view schematically showing a current collecting part according to a first exemplary embodiment.
FIG. 4 illustrates an exploded perspective view schematically showing a state in which a first current collecting member and a second current collecting member (configuring the current collecting part of FIG. 3) are separated.
FIG. 5 illustrates a side view schematically showing a laser welding process in a state in which filler is positioned on a first protruding part and a second protruding part.
FIG. 6 illustrates a cross sectional side view schematically showing a state in which a first protruding part of a first current collecting member and a second protruding part of a second current collecting member are welded.
FIG. 7 illustrates a side view schematically showing welding protuberances on a first protruding part and a second protruding part of a rechargeable battery according to a second exemplary embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. Like reference numerals refer to like elements throughout.

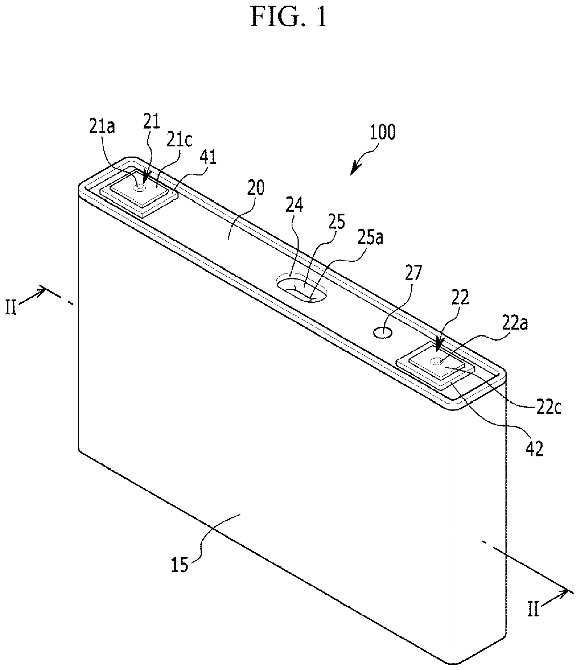

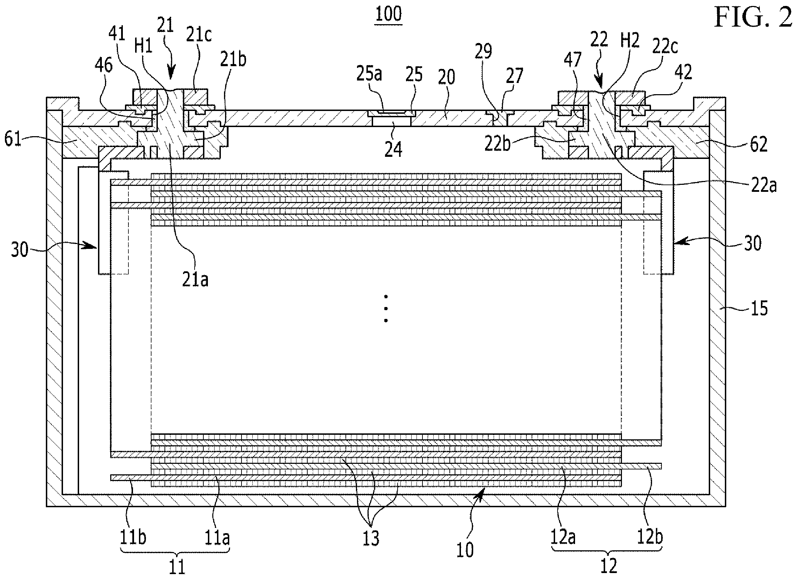

FIG. 1 illustrates a perspective view schematically showing a rechargeable battery according to a first exemplary embodiment, and FIG. 2 illustrates a cross-sectional view taken along line II-II in FIG. 1.

As shown in FIG. 1 and FIG. 2, the rechargeable battery 100 according to a first exemplary embodiment includes an electrode assembly 10 (for performing charging and discharging operations, e.g., that is chargeable and dischargeable), electrode terminals 21 and 22 electrically connected to the electrode assembly 10, a case 15 accommodating the electrode assembly 10 therein, and a current collecting part 30 electrically connecting between the electrode assembly 10 and the electrode terminals 21 and 22. A cap plate 20 (in or through which a first electrode terminal 21 (hereinafter, referred to as a "negative terminal") and a second electrode terminal 22 (hereinafter, referred to as a "positive terminal") are installed) may be coupled with an opening of the case 15.

For example, the electrode assembly 10 may be formed by disposing the first electrode 11 (hereinafter, referred to as a "negative electrode") and a second electrode 12 (hereinafter, referred to as a "positive electrode") on sides, e.g., both sides, of an insulator, e.g., a separator 13, and winding the negative electrode 11, the separator 13, and the positive electrode 12 in a jelly roll state.

The negative electrode 11 and the positive electrode 12 may each include coating parts 11a and 12a (formed by applying an active material to a current collector of a metal plate) and uncoated parts 11b and 12b (formed as the current collector exposed by not applying the active material thereto).

The uncoated region 11b of the negative electrode 11 may be formed at one end of the negative electrode 11, e.g., along the spiral-wound negative electrode 11. The uncoated region 12b of the positive electrode 12 may be formed at one end of the positive electrode 12, e.g., along the spiral-wound positive electrode 12. Therefore, the uncoated regions 11b and 12b may be disposed at both, e.g., opposite, ends of the electrode assembly 10.

The case 15 may have an approximately cuboid or prismatic shape so as to provide a space for receiving and/or accommodating the electrode assembly 10 and an electrolyte solution therein. The opening (connecting external and internal spaces) may be formed at one side of the cuboid or prismatic shape. The opening may allow the electrode assembly 10 to be inserted into the case 15.

The cap plate 20 may be on or at the opening of the case 15 to close and seal the case 15. In an implementation, the case 15 and the cap plate 20 may be made of an aluminum material and be welded to each other.

The cap plate 20 may include, e.g., an electrolyte injection opening 29, a vent hole 24, and terminal holes HI and H2. The electrolyte injection opening 29 may allow electrolyte solution to be injected into the case 15 after coupling the cap plate 20 with the case 15. After injecting the electrolyte solution, the electrolyte injection opening 29 may be sealed by a sealing cap 27.

The vent hole 24 may be configured so that it may discharge an internal pressure of the rechargeable battery 100 when the internal pressure reaches exceeds a predetermined pressure, and may be closed and sealed by the vent plate 25. When the internal pressure of the rechargeable battery 100 reaches or exceeds the predetermined pressure, the vent plate 25 may be cut or may burst to open the vent hole 24. The vent plate 25 may have a notch 25 a inducing the cut or bursting.

The negative terminal 21 and the positive terminal 22 may be in or extend through the terminal holes H1 and H2 of the cap plate 20, and may be electrically connected to the electrode assembly 10. For example, the negative terminal 21 may be electrically connected to the negative electrode 11 of the electrode assembly 10, and the positive terminal 22 may be electrically connected to the positive electrode 12 of the electrode assembly 10. Therefore, the electrode assembly 10 may be drawn outside of the case 15 through the negative terminal 21 and positive terminal 22.

The electrode terminals 21 and 22 may include rivet terminals 21a and 22a (in the terminal holes H1 and H2 of the cap plate 20), flanges 21b and 22b (having a sufficient width to integrate the rivet terminals 21a and 22a to the inside of the cap plate 20), and plate terminals 21c and 22c (at an outer side of the cap plate 20) that are connected to the rivet terminals 21a and 22a by riveting or welding.

Negative and positive gaskets 46 and 47 may be installed between the rivet terminals 21a and 22a of the electrode terminals 21 and 22 and inner sides of the terminal holes H1 and H2 of the cap plate 20, and thus may seal and electrically insulate a space between the rivet terminals 21a and 22a of the electrode terminals 21 and 22 and the cap plate 20.

The negative and positive gaskets 46 and 47 may also extend between the flanges 21b and 22b and an inner side of the cap plate 20, to help further seal and electrically insulate the space between the flanges 21b and 22b and the cap plate 20. For example, the negative and positive gaskets 46 and 47 may help reduce the likelihood of and/or prevent the electrolyte solution from leaking through the terminal holes H1 and H2 by installing the electrode terminals 21 and 22 in the cap plate 20.

The current collecting part 30 electrically connects the electrode terminals 21 and 22 to the negative and positive electrodes 11 and 12 of the electrode assembly 10, respectively. For example, the current collecting part 30 may be coupled with lower ends of the rivet terminals 21a and 22a to caulk with the lower ends. Thus, the current collecting part 30 may be connected to the lower ends of the rivet terminals 21a and 22a while being supported by the flanges 21b and 22b. In an implementation, the current collecting part 30 may be caulked to the rivet terminals 21a and 22a, or the current collecting part 30 and the rivet terminals 21a and 22a may be coupled by welding, e.g., without a caulking process.

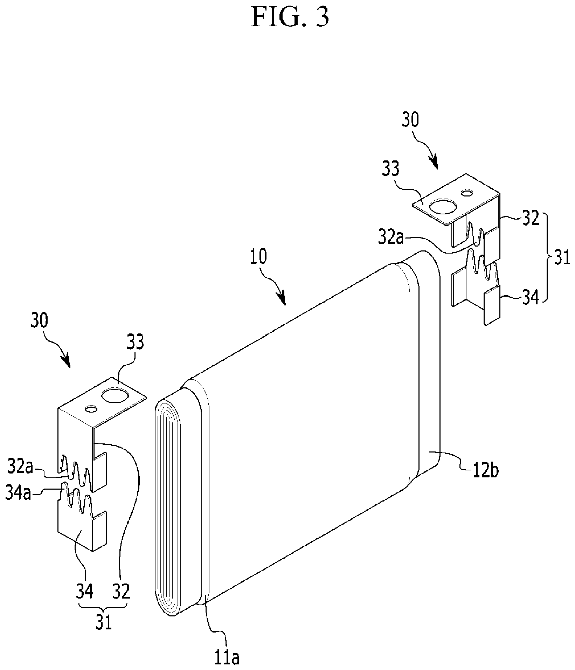

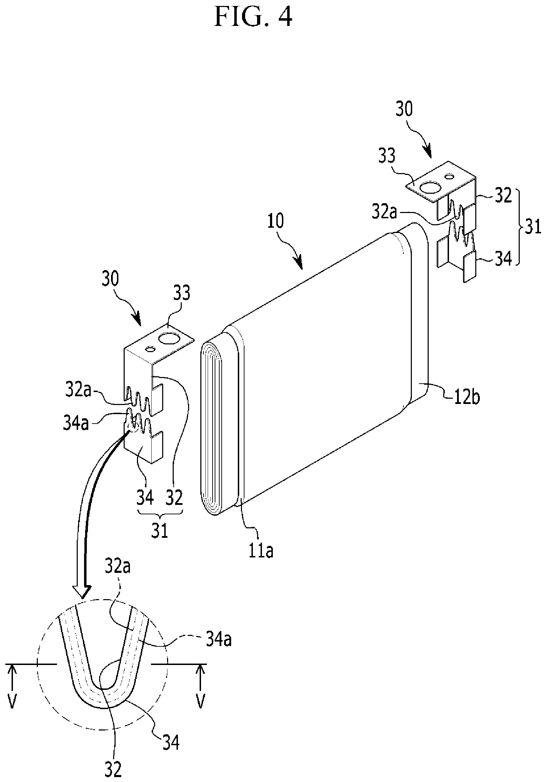

FIG. 3 illustrates a perspective view schematically showing a current collecting part according to a first exemplary embodiment, and FIG. 4 illustrates a perspective view schematically showing a state in which a first current collecting member and a second current collecting member configuring the current collecting part of FIG. 3 are separated.

As shown in FIG. 3 and FIG. 4, a current collecting part 30 according to a first exemplary embodiment includes a current collecting plate 31 (electrically connected and/or adjacent to the electrode assembly 10) and a lead member 33 (connecting the current collecting plate 31 to the electrode terminals 21 and 22).

The current collecting plate 31 includes a first current collecting member 32 (connected to the lead member 33) and a second current collecting member 34 (connected to the first current collecting member 32) by the welding.

The first current collecting member 32 may have one side thereof connected to the lead member 33 and another side thereof adjacent to and electrically connected to the electrode assembly 10. The first current collecting member 32 may be formed of a same metal material as that of the lead member 33. In an implementation, the first current collecting member 32 may be integrated with the lead member 33 as a one-piece unit. The first current collecting member 32 may include a plurality of, e.g., at least two, first protruding parts 32a protruded from a side thereof and connected or coupled with the second current collecting member 34.

The plurality of first protruding parts 32a may protrude equidistantly in the second current collecting member 34 direction (e.g., toward the second current collecting member 34) from the first current collecting member 32, and may be welded and connected into the second current collecting member 34. The first protruding parts 32a may be formed so as to have a diameter or width that decreases, e.g., gradually decreases, toward an end, e.g., a protruding end, thereof. Accordingly, second protruding parts 34a of the second current collecting member 34 may be stably inserted into the first protruding parts 32a.

As a portion connected to the first current collecting member 32, the second current collecting member 34 may be electrically connected to the electrode assembly 10 together with the first current collecting member 32. The second current collecting member 34 may be connected to the electrode assembly 10 (together with the first current collecting member 32) to perform a current collecting action. In an implementation, the second current collecting member 34 may be made of a same metal material as that of the first current collecting member 32. The second current collecting member 34 may include the second protruding parts 34a, which may be connected to or coupled with the first protruding parts 32a of the first current collecting member 32.

For example, at least two second protruding parts 34a may protrude in the first protruding part 32a direction from the second current collecting member 34. In an implementation, at least two second protruding parts 34a may protrude equidistantly from the second current collecting member 34 and may be inserted into the first protruding parts 32a. As described above, the first protruding parts 32a of the first current collecting member 32 and the second protruding parts 34a of the second current collecting member 34 may be connected by the welding in a state in which they meet each other. For example, the first protruding parts 32a and the second protruding parts 34a may have a complementary, interengaging, and/or sawtooth shape or arrangement, which may facilitate coupling of the first current collecting member 32 and the second current collecting member 34. For example, the uncoated part 11b of the electrode assembly 10 may be sandwiched between the first protruding parts 32a and the second protruding parts 34a when the battery 100 is assembled. The enlarged portion of FIG. 4 illustrates an assembled view in which the uncoated part of the electrode assembly 10 is sandwiched between the first protruding parts 32a and the second protruding parts 34a.

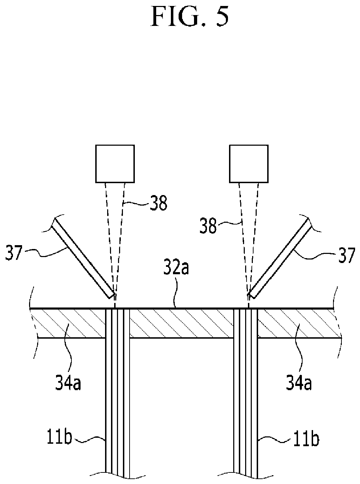

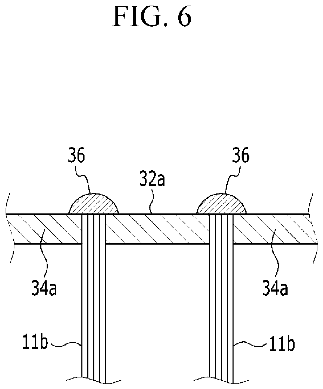

FIG. 5 illustrates a side view schematically showing a laser welding process in a state in which filler is positioned on a first protruding part and a second protruding part, and FIG. 6 illustrates a cross sectional side view schematically showing a state in which a first protruding part of a first current collecting member and a second protruding part of a second current collecting member are welded.

As shown in FIG. 5 and FIG. 6, the first protruding part 32a of the first current collecting member 32 and the second protruding part 34a of the second current collecting member 34 are provided with welding protuberances 36 (e.g., formed by welding). For example, the welding protuberances 36 may be welded and formed while covering a portion of the first protruding part 32a and a portion of the second protruding part 34a. For example, during a process by which the first protruding part 32a and the second protruding part 34a are connected or coupled by welding, the protruded portion of the welding protuberances 36 may protrude upwardly or outwardly from surfaces, e.g., outer surfaces, of the first protruding part 32a and the second protruding part 34a. Filler 37 is used in the process of welding the first protruding part 32a and the protruding part 34a. As a result, the welding protuberances 36 may protrude to or at an outer side of the surfaces of the first protruding part 32a and the second protruding part 34a.

For example, the filler 37 may be positioned before the welding is performed in the state in which the second protruding parts 34a (of the second current collecting member 34) are positioned between the first protruding parts 32a (of the first current collecting member 32). Further, the welding of the first protruding part 32a and the second protruding part 34a proceeds by laser welding while melting the filler. As a result, in the state in which the first protruding part 32a and the second protruding part 34a are welded, the welding protuberances 36 (protruding to the outer side of the surface of the first protruding part 32a and the second protruding part 34a) are formed. The welding protuberances 36 are formed in or during the process by which the first protruding part 32a and the second protruding part 34a are welded to help reduce the likelihood of and/or prevent a perforation from being generated during the welding process that uses a laser 38. Therefore, it is possible to help prevent a reduction in the durability of the rechargeable battery 100. The welding protuberances 36 may protrude so as to have a maximum height at a middle portion thereof (e.g., a portion that is between the first current collecting member 32 and the second current collecting member 34). As described above, the welding protuberances 36 may protrude to a maximum height, e.g., may have an apex, at the middle portion thereof between the first current collecting member 32 and the second current collecting member 34 in order to maximally secure a welding thickness of a portion at which the durability may otherwise be lowered during the welding process.

Negative and positive insulation members 61 and 62 may be installed between the current collecting part 30 and the cap plate 20, respectively, and thus may electrically insulate the current collecting part 30 and the cap plate 20 from each other. In addition, the negative and positive insulation members 61 and 62 may have one side coupled with the cap plate 20 and another side covered the current collecting part 30, the rivet terminals 21a and 22a, and the flanges 21b and 22b, such that the connection structure therebetween may be stabilized.

In an implementation, the cap plate 20 may be electrically connected to any one of the negative terminal 21 and the positive terminal 22. In an implementation, the cap plate 20 may be electrically connected to the positive terminal 22.

In the negative terminal 21, the insulation member 41 may be installed between the plate terminal 21c and the cap plate 20 to electrically insulate the plate terminal 21c and the cap plate 20 from each other. For example, the cap plate 20 may be maintained in an electrically insulated state with respect to the negative terminal 21.

For example, the insulation member 41 may be interposed between the plate terminal 21c and the cap plate 20, and may penetrate through or be penetrated by the rivet terminal 21a. Accordingly, the insulation member 41 and the plate terminal 21c may be coupled with the upper end of the rivet terminal 21a to caulk the upper end thereof, such that the insulation member 41 and the plate terminal 21c may be coupled with the upper end of the rivet terminal 21a.

In an implementation, the negative electrode gasket 46 may extend between the rivet terminal 21a and the insulation member 41. For example, the negative electrode gasket 46 may help seal and electrically insulate between the rivet terminal 21a and the insulation member 41.

In the positive terminal 22, the top plate 42 may be formed of a conductive member and may be installed between the plate terminal 22c and the cap plate 20 to electrically connect the plate terminal 22c and the cap plate 20 with each other. For example, the cap plate 20 may be maintained in an electrically connected state with respect to the electrode assembly 10 through the positive terminal 22.

For example, the top plate 42 may be interposed between the plate terminal 22c and the cap plate 20, and may penetrate through or may be penetrated by the rivet terminal 22a. Accordingly, the top plate 42 and the plate terminal 22c may be coupled with the upper end of the rivet terminal 22a to caulk the upper end, such that the top plate 42 and the plate terminal 22c may be coupled with the upper end of the rivet terminal 22a.

In an implementation, the positive electrode gasket 47 may extend between the rivet terminal 22a and the top plate 42. For example, the positive electrode gasket 47 may help prevent the rivet terminal 22a and the top plate 42 from being directly electrically connected to each other. The rivet terminal 22a may be electrically connected to the top plate 42 through the plate terminal 22c, and may be electrically connected to the cap plate 20 through the top plate 42.

As described above, the current collecting part 30 of the rechargeable battery 100 includes the first current collecting member 32 and the second current collecting member 34 as the portions that are adjacent to and electrically connected to the electrode assembly 10. Further, the welding protuberances 36 are formed during the process by which the first current collecting member 32 and the second current collecting member 34 are welded by the laser welding. Accordingly, the welding protuberances 36 are formed at the portion at which the first current collecting member 32 and the second current collecting member 34 are welded, such that the welded surface may have a sufficient thickness. As a result, the laser may not penetrate into the rechargeable battery 100 during the welding process, thereby making it possible to help prevent the electrode plate of the electrode assembly 10 from being damaged.

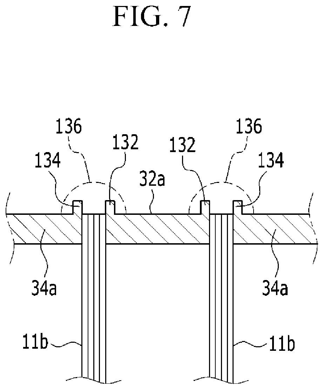

FIG. 7 illustrates a side view schematically showing welding protuberances on a first protruding part and a second protruding part of a rechargeable battery according to a second exemplary embodiment. In FIG. 1 to FIG. 6, the same reference numerals refer to the same member having the same functions. Hereinafter, repeated detailed descriptions of the same reference numerals may be omitted.

As shown in FIG. 7, the first protruding part 32a (of the first current collecting member 32) according to the present embodiment may be provided with or may include a first bent part 132. In addition, the second protruding part 34a (of the second current collecting member 34) may be provided with or may include a second bent part 134. The first bent part 132 and the second bent part 134 may be welded by laser welding in a state in which they are adjacent to one another. For example, in the process of performing the laser welding, a portion of the first bent part 132 and a portion of the second bent part 134 may be melted to form welding protuberances 136, shown with a dashed line in FIG. 7. In an implementation, the portion of the first bent part 132 and the portion of the second bent part 134 may be melted to form the welding protuberances 36, by way of example. In an implementation, the welding protuberances 36 may be formed by the melting of the first bent part 132 and the second bent part 134 together with melting of the filler in a state in which the filler is positioned between the first bent part 132 and the second bent part 134.

As described above, the welding protuberances 136 may be formed by the melting of the first bent part 132 and the second bent part 134 and/or melting of the filler, thereby making it possible to stably prevent the laser beam from damaging the inner electrode-plate of the rechargeable battery during the laser welding process.

By way of summation and review, a current collecting part of the rechargeable battery and the electrode assembly may be connected by laser welding.

A portion at which the current collecting part and the electrode assembly are connected by the laser welding may be depressed at the time of the welding process. A laser beam may penetrate through the depressed portion in the welding portion of the electrode assembly and the current collecting part. In this case, the rechargeable battery may be damaged.

The embodiments may provide a rechargeable battery having improved durability.

The embodiments may provide a rechargeable battery in which a depression part is not formed when an electrode assembly and a current collecting part are coupled by a welding process.

According to an embodiment, when the electrode assembly and the current collecting part are connected by the laser welding, the laser welding for forming the welding protuberance may be performed, such that the depressed portion may not be formed in the portion at which the electrode assembly and the current collecting part are connected, thereby making it possible to help improve the durability of the rechargeable battery.

It is clear for a person skilled in the art that the disclosed embodiments can also be combined where possible.

## Claims

1. A rechargeable battery, comprising:
an electrode assembly (10) that is chargeable and dischargeable;
electrode terminals (21, 22) electrically connected to the electrode assembly (10);
a case (15) accommodating the electrode assembly (10) therein; and
a current collecting part (30) electrically connecting between the electrode assembly (10) and the electrode terminals (21, 22), wherein:
the current collecting part (30) includes:
a current collecting plate (31) electrically connected to the electrode assembly (10), and
a lead member (33) connecting the electrode terminals (21, 22) and the current collecting plate (31),
the current collecting plate (31) includes:
a first current collecting member (32) connected to the lead member (33), and
a second current collecting member (34) welded to the first current collecting member (32) such that welding protuberances (36) are provided on a region where the first current collecting member (32) and the second current collecting member (34) are welded,
**characterized in that**
the welding protuberances (36) are formed by laser welding in a state in which filler (37) is positioned at a space between the first current collecting member (32) and the second current collecting member (34).

2. The rechargeable battery as claimed in claim 1, wherein the welding protuberances (36) are configured to cover a part of an edge of the first current collecting member (32) and a part of an edge of the second current collecting member (34).

3. The rechargeable battery as claimed in claim 1 or 2, wherein the welding protuberances (36) are configured to protrude to have a maximum height at a midpoint between the first current collecting member (32) and the second current collecting member (34).

4. The rechargeable battery as claimed in one of the preceding claims , wherein:
the first current collecting member (32) includes a plurality of first protruding parts (32a) protruding from one side thereof, and
the second current collecting member (34) includes a plurality of second protruding parts (34a) engaged with the plurality of first protruding parts (32a).

5. The rechargeable battery as claimed in claim 4, wherein each first protruding part (32a) has a width that decreases from a base thereof to a protruding end thereof.

6. The rechargeable battery as claimed in claim 4 or 5, wherein:
each second protruding part (34a) has a width that decreases from a base thereof to a protruding end thereof, and
an edge portion of the second protruding part (34a) is configured to be welded to the first protruding part (32a).

7. The rechargeable battery as claimed in one of claims 1 to 6, wherein:
the first current collecting member(32) includes a first bent part protruding (132) at an edge thereof,
the second current collecting member (34) includes a second bent part (134) facing the first bent part and (132) protruding at an edge of the second current collecting member (34), and
each welding protuberance (36) is formed by welding the first bent part (132) and the second bent part (134).

8. The rechargeable battery as claimed in claim 7, wherein the first bent part (132) and the second bent part (134) are configured to protrude at a same height with respect to each other.

9. The rechargeable battery as claimed in one of claims 4 to 8, wherein:
the electrode assembly (10) includes an uncoated part (11b) at an end thereof, and
portions of the uncoated part (11b) are configured to be sandwiched between the first protruding parts (32a) and the second protruding parts (34a).

10. The rechargeable battery as claimed in one of the preceding claims, wherein
the first collecting member (32) is configured to be integrated with the lead member (33) as a one-piece unit.

11. The rechargeable battery as claimed in one of claims 5 to 10, wherein the width of the first protruding part (32a) is configured to decrease gradually from a base thereof to a protruding end thereof.

12. The rechargeable battery as claimed in one of the preceding claims, wherein the first collecting member (32) is made of the same material as that of the lead member (33).

13. The rechargeable battery as claimed in claim 4, the first protruding parts (32a) and the second protruding parts (34a) have a saw-tooth shape.

## Patentansprüche

1. Wiederaufladbare Batterie, umfassend:
eine Elektrodenanordnung (10), die aufladbar und entladbar ist;
Elektrodenanschlüsse (21, 22), die elektrisch mit der Elektrodenanordnung (10) verbunden sind;
ein Gehäuse (15), das die Elektrodenanordnung (10) in sich aufnimmt; und
ein Stromabnahmeteil (30), das elektrisch eine Verbindung zwischen der Elektrodenanordnung (10) und den Elektrodenanschlüssen (21, 22) herstellt, wobei:
das Stromabnahmeteil (30) umfasst:
eine Stromabnahmeplatte (31), die elektrisch mit der Elektrodenanordnung (10) verbunden ist, und
ein Leitungselement (33), das die Elektrodenanschlüsse (21, 22) und die Stromabnahmeplatte (31) verbindet, wobei
die Stromabnahmeplatte (31) umfasst:
ein erstes Stromabnahmeelement (32), das mit dem Leitungselement (33) verbunden ist, und
ein zweites Stromabnahmeelement (34), das mit dem ersten Stromabnahmeelement (32) derart verschweißt ist, dass Schweißvorsprünge (36) auf einem Bereich vorgesehen sind, in dem das erste Stromabnahmeelement (32) und das zweite Stromabnahmeelement (34) verschweißt sind,
**dadurch gekennzeichnet, dass**
die Schweißvorsprünge (36) durch Laserschweißen in einem Zustand gebildet werden, in dem Füllstoff (37) in einem Raum zwischen dem ersten Stromabnahmeelement (32) und dem zweiten Stromabnahmeelement (34) angeordnet ist.

2. Wiederaufladbare Batterie nach Anspruch 1, wobei die Schweißvorsprünge (36) dazu ausgelegt sind, einen Teil einer Kante des ersten Stromabnahmeelements (32) und einen Teil einer Kante des zweiten Stromabnahmeelements (34) abzudecken.

3. Wiederaufladbare Batterie nach Anspruch 1 oder 2, wobei die Schweißvorsprünge (36) dazu ausgebildet sind, so vorzustehen, dass sie in einem Mittelpunkt zwischen dem ersten Stromabnahmeelement (32) und dem zweiten Stromabnahmeelement (34) eine maximale Höhe aufweisen.

4. Wiederaufladbare Batterie nach einem der vorangehenden Ansprüche, wobei:
das erste Stromabnahmeelement (32) eine Mehrzahl von ersten vorstehenden Teilen (32a) umfasst, die von einer seiner Seiten vorstehen, und
das zweite Stromabnahmeelement (34) eine Mehrzahl von zweiten vorstehenden Teilen (34a) umfasst, die mit der Mehrzahl von ersten vorstehenden Teilen (32a) in Eingriff stehen.

5. Wiederaufladbare Batterie nach Anspruch 4, wobei jeder erste vorstehende Teil (32a) eine Breite aufweist, die von seiner Basis bis zu seinem vorstehenden Ende abnimmt.

6. Wiederaufladbare Batterie nach Anspruch 4 oder 5, wobei:
jeder zweite vorstehende Teil (34a) eine Breite aufweist, die von seiner Basis bis zu seinem vorstehenden Ende abnimmt, und
ein Kantenabschnitt des zweiten vorstehenden Teils (34a) dazu ausgelegt ist, mit dem ersten vorstehenden Teil (32a) verschweißt zu werden.

7. Wiederaufladbare Batterie nach einem der Ansprüche 1 bis 6, wobei:
das erste Stromabnahmeelement (32) einen ersten Biegeteil (132) umfasst, der an einer seiner Kanten vorsteht,
das zweite Stromabnahmeelement (34) einen zweiten Biegeteil (134) umfasst, der dem ersten Biegeteil (132) zugewandt ist und an einer Kante des zweiten Stromabnahmeelements (34) vorsteht, und
jeder Schweißvorsprung (36) durch Schweißen des ersten Biegeteils (132) und des zweiten Biegeteils (134) gebildet ist.

8. Wiederaufladbare Batterie nach Anspruch 7, wobei
der erste Biegeteil (132) und der zweite Biegeteil (134) so ausgebildet sind, dass sie in gleicher Höhe in Bezug zueinander vorstehen.

9. Wiederaufladbare Batterie nach einem der Ansprüche 4 bis 8, wobei:
die Elektrodenanordnung (10) an einem ihrer Enden einen unbeschichteten Teil (11b) umfasst, und
Abschnitte des unbeschichteten Teils (11b) so ausgebildet sind, dass sie zwischen den ersten vorstehenden Teilen (32a) und den zweiten vorstehenden Teilen (34a) angeordnet sind.

10. Wiederaufladbare Batterie nach einem der vorangehenden Ansprüche, wobei
das erste Abnahmeelement (32) so ausgebildet ist, dass es mit dem Leitungselement (33) als einteilige Einheit integrierbar ist.

11. Wiederaufladbare Batterie nach einem der Ansprüche 5 bis 10, wobei die Breite des ersten vorstehenden Teils (32a) so ausgelegt ist, dass sie kontinuierlich von seiner Basis zu seinem vorstehenden Ende abnimmt.

12. Wiederaufladbare Batterie nach einem der vorangehenden Ansprüche, wobei das erste Abnahmeelement (32) aus dem gleichen Material wie das des Leitungselements (33) hergestellt ist.

13. Wiederaufladbare Batterie nach Anspruch 4, wobei die ersten vorstehenden Teile (32a) und die zweiten vorstehenden Teile (34a) eine Sägezahnform aufweisen.

## Revendications

1. Batterie rechargeable comprenant :
un ensemble d'électrodes (10) qui est chargeable et déchargeable ;
des bornes d'électrode (21, 22) électriquement raccordée à l'ensemble d'électrodes (10) ;
un boîtier (15) logeant l'ensemble d'électrodes (10) à l'intérieur de ce dernier ;
une partie de collecte de courant (30) se raccordant électriquement entre l'ensemble d'électrodes (10) et les bornes d'électrode (21, 22), dans laquelle :
la partie de collecte de courant (30) comprend :
une plaque de collecte de courant (31) raccordée électriquement à l'ensemble d'électrodes (10), et
un élément de fil (33) raccordant les bornes d'électrode (21, 22) et la plaque de collecte de courant (31),
la plaque de collecte de courant (31) comprend :
un premier élément de collecte de courant (32) raccordé à l'élément de fil (33), et
un second élément de collecte de courant (34) soudé au premier élément de collecte de courant (32) de sorte que des protubérances de soudage (36) sont prévues sur une région où le premier élément de collecte de courant (32) et le second élément de collecte de courant (34) sont soudés, **caractérisée en ce que** :
les protubérances de soudage (36) sont formées par soudage au laser dans un état dans lequel la matière de remplissage (37) est positionnée dans un espace entre le premier élément de collecte de courant (32) et le second élément de collecte de courant (34).

2. Batterie rechargeable selon la revendication 1, dans laquelle les protubérances de soudage (36) sont configurées pour recouvrir une partie d'un bord du premier élément de collecte de courant (32) et une partie d'un bord du second élément de collecte de courant (34).

3. Batterie rechargeable selon la revendication 1 ou 2, dans laquelle les protubérances de soudage (36) sont configurées pour faire saillie afin d'avoir une hauteur maximum à un point central entre le premier élément de collecte de courant (32) et le second élément de collecte de courant (34).

4. Batterie rechargeable selon l'une des revendications précédentes, dans laquelle :
le premier élément de collecte de courant (32) comprend une pluralité de premières parties en saillie (32a) faisant saillie de son côté, et
le second élément de collecte de courant (34) comprend une pluralité de secondes parties en saillie (34a) mises en prise avec la pluralité de premières parties en saillie (32a).

5. Batterie rechargeable selon la revendication 4, dans laquelle chaque première partie en saillie (32a) a une largeur qui diminue de sa base à son extrémité en saillie.

6. Batterie rechargeable selon la revendication 4 ou 5, dans laquelle :
chaque seconde partie en saillie (34a) a une largeur qui diminue de sa base à son extrémité en saillie, et
une partie de bord de la seconde partie en saillie (34a) est configurée pour être soudée à la première partie en saillie (32a).

7. Batterie rechargeable selon l'une des revendications 1 à 6, dans laquelle :
le premier élément de collecte de courant (32) comprend une première partie pliée (132) en saillie au niveau de son bord,
le second élément de collecte de courant (34) comprend une seconde partie pliée (134) faisant face à la première partie pliée (132) et faisant saillie au niveau d'un bord du second élément de collecte de courant (34), et
chaque protubérance de soudage (36) est formée en soudant la première partie pliée (132) et la seconde partie pliée (134).

8. Batterie rechargeable selon la revendication 7, dans laquelle la première partie pliée (132) et la seconde partie pliée (134) sont configurées pour faire saillie à une même hauteur l'une par rapport à l'autre.

9. Batterie rechargeable selon l'une des revendications 4 à 8, dans laquelle :
l'ensemble d'électrodes (10) comprend une partie non couverte (11b) au niveau de son extrémité, et
des parties de la partie non couverte (11b) sont configurées pour être prises en sandwich entre les premières parties en saillie (32a) et les secondes parties en saillie (34a).

10. Batterie rechargeable selon l'une des revendications précédentes, dans laquelle :
le premier élément de collecte (32) est configuré pour être intégré avec l'élément de fil (33) sous la forme d'une unité d'un seul tenant.

11. Batterie rechargeable selon l'une des revendications 5 à 10, dans laquelle la largeur de la première partie en saillie (32a) est configurée pour diminuer progressivement de sa base à son extrémité en saillie.

12. Batterie rechargeable selon l'une des revendications précédentes, dans laquelle le premier élément de collecte (32) est réalisé avec le même matériau de celui de l'élément de fil (33).

13. Batterie rechargeable selon la revendication 4, les premières parties en saillie (32a) et les secondes parties en saillie (34a) ont une forme en dent de scie.
